# EUROPEAN PATENT APPLICATION

(11) **EP 4 248 745 A1**
(43) Date of publication of application: **27.09.2023**
(21) Application number: 22204729.2
(22) Date of filing: 31.10.2022
(51) Int. Cl.: A01K 73/06, G08B 21/02, B63B 35/14, B63C 9/00

(54) **REMOTE CONTROL SYSTEM OF FISHING EQUIPMENT FOR FISHING VESSEL**

(30) Priority: 24.03.2022 KR 20220036673
(71) Applicant: National Institute of Fisheries Science, Busan 46083 (KR)
(72) Inventor: CHA, Bong Jin, 48060 Busan (KR); BAE, Bong Seong, 48443 Busan (KR); LEE, Gun Ho, 46010 Busan (KR); PARK, Su Bong, 49206 Busan (KR); CHO, Sam Kwang, 48230 Busan (KR)
(74) Representative: Staudt, Hans-Peter

(57) **Abstract**

A remote control system of fishing equipment for a fishing vessel is proposed. The system enables each sailor to safely manipulate the corresponding fishing equipment (21) during fishing using the fishing equipment installed on the fishing vessel (10). In the system, wireless communication is enabled between a wearable manipulation device (11) worn by each sailor on board the fishing vessel and a central control device (20) installed in a wheelhouse (3) of the fishing vessel, operation of each piece of fishing equipment installed on the fishing vessel is to be individually controlled by the central control device via a cable (29), and in the meantime, a manipulation device of a sailor in charge assigned to each piece of fishing equipment is to be synchronized with the corresponding fishing equipment, so that a manipulation signal generated by pressing a manipulation button of the wearable manipulation device worn by each sailor is input to the central control device.

## Description

### CROSS REFERENCE TO RELATED APPLICATION

The present application claims priority to Korean Patent Application No. 10-2022-0036673, filed March 24, 2022, the entire contents of which is incorporated herein for all purposes by this reference.

### BACKGROUND OF THE INVENTION

### Field of the Invention

The present disclosure relates to a remote control system of fishing equipment for a fishing vessel, and in the remote control system, wireless communication is enabled between a wearable manipulation device worn by each sailor on his or her body on board the fishing vessel and a central control device installed in a wheelhouse of the fishing vessel, operation of each piece of fishing equipment installed on the fishing vessel is to be individually controlled by the central control device, and in the meantime, a manipulation device of a sailor in charge assigned to each piece of fishing equipment is synchronized with the corresponding fishing equipment, thereby allowing each sailor to operate the fishing equipment in a non-contact manner at a position spaced apart from the fishing equipment by a predetermined safe distance.

### Description of the Related Art

In general, a fishing vessel is a vessel equipped with facilities required for catching, storing, and transporting fish through fishing, and accounts for 80% or more of all vessels registered in South Korea. In addition, 90% or more of the fishing vessels are small and medium-sized fishing vessels of less than 10 tons, and fishing vessels that are 10 years old or older account for a significant portion, and thus various safety accidents occur frequently on the fishing vessels due to poor working environments at sea and due to outdated facilities.

As described above, when fishing vessel accidents that occur at sea are separated by type, the accidents occur in an order in which collision accidents between fishing vessels account for the largest proportion at around 40%, failures of engines or propulsion systems account for at around 35%, and getting caught in a fishing net accounts for at around 20%. According to the results of the national implementation of prevention measures for fishing vessel accidents from 2013, there is a trend that the number of occurrences of the fishing vessel accidents listed above and casualties thereof from that year to now have been gradually declining. However, there is also a trend that sailors' safety accidents that occur during operation of fishing vessels or fishing are on the rise.

As described above, the sailors' safety accidents occurring on fishing vessels are caused by accidental situations in which a sailor falls into the sea due to a tripping during operation of a fishing vessel, a part of the worker's body handling fishing equipment such as a net hauling machine or net throwing machine is rolled into the corresponding machine, or a part of the worker's body gets caught on a net or a rope and is dragged out of the hull together with fishing gear during a net throwing process of the fishing gear. The main causes of such safety accidents may be the workers' non-compliance with safety rules, but the failure of providing each fishing vessel with an efficient system to manage the safety of each sailor is emerging as the biggest cause.

In other words, most accident prevention systems installed on the fishing vessels are limited to a communication system configured to predict sea climates such as wave heights or wind speed and to notify the fishing vessels, so as to restrain the fishing vessels from departing or urging the fishing vessels to sail back, and are limited to a monitoring system configured to warn and prevent deviations of the fishing vessels or collisions between the fishing vessels on the basis of the communication system and detect and prevent causes of engine or propulsion system failures in advance. Accordingly, the application of a safety management system for the purpose of preventing sailor safety accidents that may occur during the operation of fishing vessels or fishing is almost non-existent.

In order to correct the above-described problems, recently, the safety management system using radio frequency recognition technology has been gradually applied to fishing vessels. As a representative example of that, Korean Patent Application Publication No. 10-2013-0125977 (published date: November 20, 2013) is disclosed and known, describing that a receiver capable of performing wireless communication with a radio recognition unit carried by a sailor is installed in a wheelhouse and the like to periodically track a position of the radio recognition unit, and the corresponding sailor is determined to be in a dangerous condition when the position of the specific radio recognition unit is not identified or is outside a specified range.

However, there is a problem in that the conventional sailor safety management system as described above not only corresponds to a very indirect and passive management method that tracks only the position and movement of the sailor by using the radio recognition unit, but also requires a cumbersome procedure for a manager to periodically check the position and movement of the sailor by using a receiver installed in the wheelhouse and the like. In addition, there is a problem in that as a risk of safety accidents occurs and at the same time, prompt and active countermeasures tailored to a case of operation or fishing of a fishing vessel are not provided either, and thus practical and effective measures for risky situations are almost impossible to be conducted.

In particular, there is a problem in that in a case of a fishing vessel, in spite of the fact that a risk of safety accidents for mechanical workers handling fishing equipment such as a net hauling machine and a net throwing machine is higher than that of general workers who perform deck work such as sorting catches, it is impossible to systematically perform safety management according to each type of work by separating each worker. In addition, there is a problem in that even when an emergency situation such that a worker's body is drawn into fishing equipment occurs, immediate determination of the emergency situation and taking appropriate measures may not be taken, so injuries or casualties of sailors are unable to be prevented more reliably and effectively.

As a solution for solving the above-described problems, previous application with Patent Application Publication No. 10-2020-0158475 in 2020 and patent registration with Korean Patent No. 10-2226015, which were applied by the present applicant, has been disclosed and known under the same title "WEARABLE SAFETY MANAGEMENT SYSTEM FOR CREW OF FISHING VESSEL", wherein, from operation of a fishing vessel up to fishing, a sailor who is in danger of an accident or another sailor who finds the sailor at risk uses a signal button of a wearable transceiver worn on his/her body to immediately transmit an accident risk signal to a central control device of the fishing vessel, and in line with an operation mode in which fall accidents of sailors mainly occur and a fishing mode in which safety accidents caused by fishing equipment mainly occur, the central control device slows down the speed of the fishing vessel or temporarily suspends the operation of the fishing vessel in the operation mode, and on the other hand, temporarily suspends operation of specific fishing equipment or all fishing equipment installed on the deck in the fishing mode.

However, even in the case of the above-described previous application, the slowing-down operation or stopping operation of the fishing vessel, or suspending operation of the fishing equipment is performed immediately after the risk of accidents occurs during the operation of the fishing vessel or the fishing of the fishing vessel, so rather than preventing safety accidents on the fishing vessel in advance, more emphasis is placed on prompt responsive measures in line with the risk of actual accidents and the minimization of human casualties caused by the safety accidents. Due to this problem, the related art does not provide a fundamental solution to a concept of properly blocking risk factors, which may cause corresponding safety accidents, in advance before the safety accidents are caused by the fishing equipment during the fishing on the fishing vessel, and thus there is a problem in that the related art does not contribute much to an aspect of substantially reducing safety accidents that occur during fishing on fishing vessels.

### Documents of Related Art

### [Patent Documents]

(Patent Document 1) Korean Patent Application Publication No. 10-2013-0125977
(Patent Document 2) Korean Patent No. 10-2226015

### SUMMARY OF THE INVENTION

The present disclosure is devised to solve the conventional problems as described above, and an objective of the present disclosure is to provide a remote control system of fishing equipment on a fishing vessel, and in the remote control system, wireless communication is enabled between a wearable manipulation device worn by each sailor on his or her body on board the fishing vessel and a central control device installed in a wheelhouse of the fishing vessel, operation of each piece of fishing equipment installed on the fishing vessel is to be individually controlled by the central control device, and in the meantime, a manipulation device of a sailor in charge assigned to each piece of fishing equipment is to be synchronized with the corresponding fishing equipment, so that a manipulation signal generated by pressing a manipulation button of the wearable manipulation device worn by each sailor on his or her body is input to the central control device, the central control device allows the fishing equipment synchronized with the manipulation device to which the corresponding manipulation signal is input to operate according to the manipulation signal, and in this way, unlike the existing contact-type manipulation in which each sailor directly presses a switch or button provided in the fishing equipment, non-contact type manipulation in which each sailor operates the fishing equipment at a position spaced apart from the fishing equipment by a predetermined safe distance is enabled, thereby more fundamentally preventing safety accidents in which a part of the sailor's body handling the fishing equipment such as a net hauling machine or net throwing machine is rolled up into the corresponding machine, or a part of the sailor's body gets caught on a net or a rope and is dragged out of the hull with fishing gear during a net throwing process of the fishing gear.

In addition, another objective of the present disclosure to ultimately solve the technical problems is to provide a maximally arranged control system for a fishing vessel, and in the control system, together with a non-contact manipulation function of the fishing equipment described above, there is provided a function in which a manipulation button is used by each sailor to transmit an accident risk signal to a central control device regardless of distinguishing each manipulation device when a risk of safety accidents occurs during fishing, so that any sailor who witnessed a corresponding situation immediately after an occurrence of the risk of the accidents may use the manipulation button to urgently stop the operation of each piece of fishing equipment, the central control device enables activation of an alarm means such as an alarm or a warning light provided to a manipulation device worn by each remaining sailor other than the sailor who transmitted the accident risk signal, a prompt response and follow-up treatment in the event of accidents may be promoted in this way, each sailor, other than a captain, who has been granted a specific authority may use his or her manipulation device to appropriately select constant speed operation or slowing-down operation of the fishing vessel, or a going-astern operation or operation stop of the fishing vessel according to sea conditions even during the operation of the fishing vessel, emergency stopping of the fishing vessel may be enabled through the same process as that of the fishing against the risk of the accidents occurring during the operation of the fishing vessel, and so on, thereby significantly reducing an occurrence rate of safety accidents during the fishing, and at the same time, enabling safe and efficient operation of the fishing vessel and enabling prompt response and follow-up measures in the event of accidents.

In the present disclosure as a means for solving the above technical problems, there is provided a remote control system of fishing equipment for a fishing vessel, the control system assigning a sailor in charge for each piece of fishing equipment installed in the fishing vessel, so as to enable the corresponding sailor to operate the assigned fishing equipment, and including: a central control device installed in a wheelhouse of the fishing vessel; and a wearable manipulation device configured to be worn by each sailor on his or her body on board the fishing vessel, so as to enable the sailor to perform non-contact type manipulation for the fishing equipment by using wireless communication with the central control device, wherein the central control device is connected to and installed with a drive unit of each piece of fishing equipment by a control cable, each piece of fishing equipment is synchronized with the manipulation device of the sailor assigned as the sailor in charge, the manipulation device is configured to include: a watertight casing provided with a battery and a controller, which are built therein; a manipulation button provided for the fishing equipment, and installed on an outer side of a front surface of the watertight casing; and a wireless communication unit provided to communicate wirelessly with the central control device, and installed on the outer side or an inner side of the watertight casing, and the manipulation button and the wireless communication unit are respectively connected to and installed on an input side and an output side of the controller by cables. The fishing equipment may be configured to include a net hauling machine and a net throwing machine, and the manipulation button of the manipulation device is configured to include a forward rotation button and a reverse rotation button for each of the throwing machine and the throwing machine. In a non-contact manipulation method of the net hauling machine and the net throwing machine using the manipulation button, a work speed in a corresponding direction may be determined by the number of times the forward rotation button or the reverse rotation button is pressed, change of a work direction may be performed by manipulation of pressing the manipulation button in a direction opposite to a current work direction once, and in the meantime, stopping operation may be performed by manipulation of simultaneously pressing the forward rotation button and the reverse rotation button once.

As a more preferred exemplary embodiment, an auxiliary stop button may be additionally installed on a front outer surface of the manipulation device corresponding to a surface between the forward rotation button and the reverse rotation button, and the stopping operation of the net hauling machine and the net throwing machine may also be performed by manipulation in which at least one or more manipulation buttons among the forward rotation button and the reverse rotation button are pressed once together with the auxiliary stop button. The change of the work direction of the net hauling machine and the net throwing machine may be performed from a slowing-down stage of the work speed in a direction in progress toward a required work direction via a stop stage of the corresponding work. Each sailor on board the fishing vessel may be enabled to transmit an accident risk signal to the central control device by using his or her manipulation device through manipulation of quickly pressing the forward rotation button 15a and the reverse rotation button 15b two or more times at the same time, and the central control device may urgently stop operation of all the fishing equipment installed in the fishing vessel as soon as the accident risk signal is input. The wireless communication unit of the manipulation device may be a transmission/reception panel capable of performing both transmission and reception with the central control device, the manipulation device may be additionally provided with an alarm transmitter or a warning light, the transmission/reception panel may be connected to and installed on each of the input side and the output side of the controller, and the alarm transmitter or the warning light may be connected to and installed on the output side of the controller.

In addition, the drive unit of the fishing equipment may be configured to include: an oil tank configured to store hydraulic oil therein; discharge lines extending from the oil tank to the respective fishing equipment via an oil pump; flow path regulators installed at respective outlets of the discharge lines; operation lines configured to respectively connect the flow path regulators to hydraulic motors of the corresponding fishing equipment; and recovery lines respectively extending from the respective hydraulic motors to the oil tank, wherein solenoid valves may be installed in the respective discharge lines, one-way check valves may be installed in the respective recovery lines, the central control device may be connected to and installed with the oil pump by the control cable, and at the same time, may also be individually connected to each of the solenoid valves and the flow path regulators assigned to the respective fishing equipment. The drive unit of each piece of fishing equipment may be an electrically driven inverter motor assigned to each piece of fishing equipment, and the central control device may be connected to and installed with each of the inverter motors by the control cable.

On the other hand, the manipulation device may be configured to be able to additionally perform an operation control function by the manipulation button and the central control device in an operation mode of the fishing vessel, the manipulation device capable of performing the operation control function may be the manipulation device of the sailor who is authorized to participate in the operation of the fishing vessel, the central control device may be also connected to and installed with an engine control unit of an engine for the fishing vessel by the control cable, and an operation control method of the fishing vessel using the manipulation button may be configured to include: constant speed manipulation performed by pressing the forward rotation button once, twice, or three times according to the required operation speed of the fishing vessel; slowing-down manipulation performed by pressing the reverse rotation button once or twice according to a required slowing-down level; going-astern manipulation performed by pressing and holding the reverse rotation button for three to five seconds; and operation stop manipulation performed by simultaneously pressing the forward rotation button and the reverse rotation button once. An auxiliary stop button may be additionally installed on a front outer surface of the manipulation device corresponding a surface between the forward rotation button and the reverse rotation button, and the operation stop manipulation may also be performed by the manipulation in which at least one or more manipulation buttons among the forward rotation button and the reverse rotation button are pressed once together with the auxiliary stop button. In the going-astern manipulation, operation in the going-astern direction may be performed from a slowing-down stage of the speed of the fishing vessel in operation via an operation stop stage of the fishing vessel. Each sailor on board the fishing vessel may be enabled to transmit an accident risk signal to the central control device by using his or her manipulation device through manipulation of pressing the forward rotation button and the reverse rotation button quickly two or more times at the same time, and the central control device may urgently stop the operation of the engine of the fishing vessel as soon as the accident risk signal is input.

According to the present disclosure described above, the central control device recognizes the manipulation signal transmitted by the manipulation button of the wearable manipulation device worn by each sailor, and operates the fishing equipment synchronized with the corresponding manipulation device according to the manipulation signal, whereby there is provided an effect that unlike the conventional contact-type manipulation in which the sailor directly presses the switch or button provided in the fishing equipment, the non-contact type manipulation of operating the fishing equipment at the position spaced apart from the fishing equipment by the predetermined safe distance is able to be performed, and in this way, there is also provided an effect of more fundamentally preventing safety accidents in which the part of the sailor's body handling the fishing equipment such as the net hauling machine or net throwing machine is rolled up into the corresponding machine, or the part of the sailor's body gets caught on the net or the rope and is dragged out of the hull with the fishing gear during the net throwing process of the fishing gear.

In addition, each sailor is allowed to use his or her manipulation button to transmit the accident risk signal to the central control device, regardless of distinguishing each manipulation device when the risk of safety accidents occurs during the fishing, so that any sailor who witnessed the corresponding situation immediately after the occurrence of the risk of the accidents may use the manipulation button to urgently stop the operation of each piece of fishing equipment, and the central control device enables the activation of the alarm means such as the alarm or the warning light provided to the manipulation device worn by each remaining sailor other than the sailor who transmitted the accident risk signal, whereby there is provided an effect that the prompt response and follow-up processing may also be implemented at the same level as that of the previous application.

Meanwhile, there is provided an effect that each sailor, other than the captain, who has been granted the specific authority may use his or her manipulation device to appropriately select the constant speed operation or slowing-down operation of the fishing vessel, or the going-astern operation or operation stop of the fishing vessel according to the sea conditions even during the operation of the fishing vessel. In addition, there is an effect of providing the maximally arranged control system for the fishing vessel, wherein the emergency stopping of the fishing vessel may be enabled through the same process as the process during the fishing against the risk of the accidents occurring during the operation of the fishing vessel, and so on, thereby significantly reducing the occurrence rate of safety accidents during the fishing, and at the same time, enabling the safe and efficient operation of the fishing vessel and enabling the prompt response and follow-up measures in the event of accidents.

In particular, a forward rotation button and a reverse rotation button are installed as a main manipulation button on the manipulation device, an auxiliary stop button is additionally installed between the forward rotation button and the reverse rotation button, and in the meantime, the operation of the fishing equipment or the stop operation or emergency stopping operation of the fishing vessel is enabled even by the manipulation in which the auxiliary stop button is pressed once together with at least one or more of the main manipulation buttons, or is quickly pressed twice or more, whereby there are provided effects that even when each sailor performs the button manipulation in a state of being momentarily panicked by the unexpected situation or the risk of the accidents that has occurred suddenly during fishing or during operation, the possibility of completing button manipulation corresponding to the situation may be maximally increased, and in this way, unnecessary damage due to a mistake in the button manipulation may be avoided.

### BRIEF DESCRIPTION OF THE DRAWINGS

FIG. 1 is a schematic floor plan illustrating a fishing vessel to which the present disclosure is applied.
FIG. 2 is a schematic diagram illustrating a wearing state for each type of a wearable manipulation device used in the present disclosure.
FIGS. 3 and 4 are external perspective views respectively illustrating representative types of manipulation devices used in the present disclosure.
FIG. 5 is a side cross-sectional view illustrating the manipulation device shown in FIG. 4.
FIG. 6 is a wiring diagram illustrating a representative example of hydraulically driven fishing equipment and a control route thereof applied to the present disclosure.
FIG. 7 is a wiring diagram illustrating a representative example of electrically driven fishing equipment and a control route thereof applied to the present disclosure.
FIG. 8 is a view illustrating a table summarizing a control method of fishing equipment using a remote control system of the present disclosure by situation.
FIG. 9 is a view illustrating a table summarizing an operation control method of operating the fishing vessel using the remote control system of the present disclosure by situation.

### DETAILED DESCRIPTION OF THE INVENTION

Hereinafter, the present disclosure for achieving the above objectives will be described in detail with reference to the accompanying drawings.

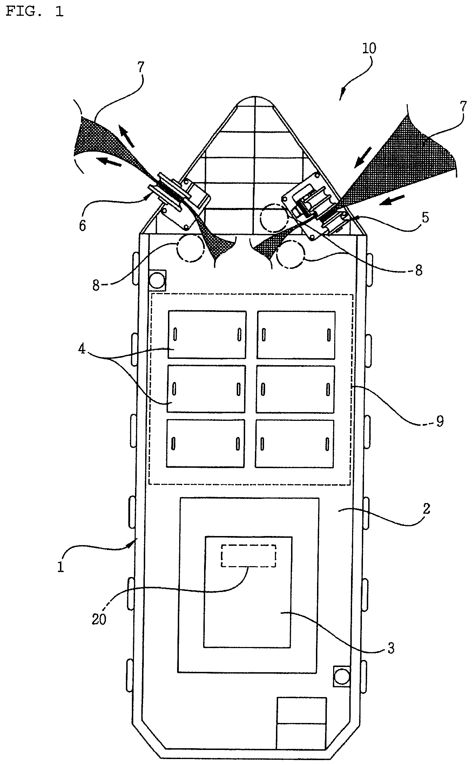

First, as shown in FIG. 1, in a conventional fishing vessel to which a remote control system of fishing equipment according to the present disclosure, the fishing equipment such as a net hauling machine 5 and a net throwing machine 6 is installed on a bow side of a hull 1, a hold cover 4 for covering a hold for storage of catches is installed on a center side of a deck 2 of the hull 1, and a wheelhouse 3 is installed on a rear side of the deck 2 of the hull 1. The periphery of the fishing equipment, such as the net hauling machine 5 or the net throwing machine 6, is a machine work area 8, a part of the deck 2 where the hold cover 4 is installed is a general work area 9, and a central control device 20 of the control system according to the present disclosure is installed in the wheelhouse 3.

FIG. 1 illustrates a representative example of a fishing vessel 10 that may be applied to the present disclosure. A position of the fishing equipment such as the net hauling machine 5 or the net throwing machine 6, and positions of the hold cover 4 and the wheelhouse 3 may be variously changed for each type of the fishing vessel 10, a position where the central control device 20 is installed may also be a different position such as an engine room and the like other than the wheelhouse 3, and it is natural that the control system of the present disclosure may also be applied to a fishing method of picking up or throwing various other fishing gear such as a trap, in addition to a fishing method of winding or unwinding a net 7 by the net hauling machine 5 and the net throwing machine 6.

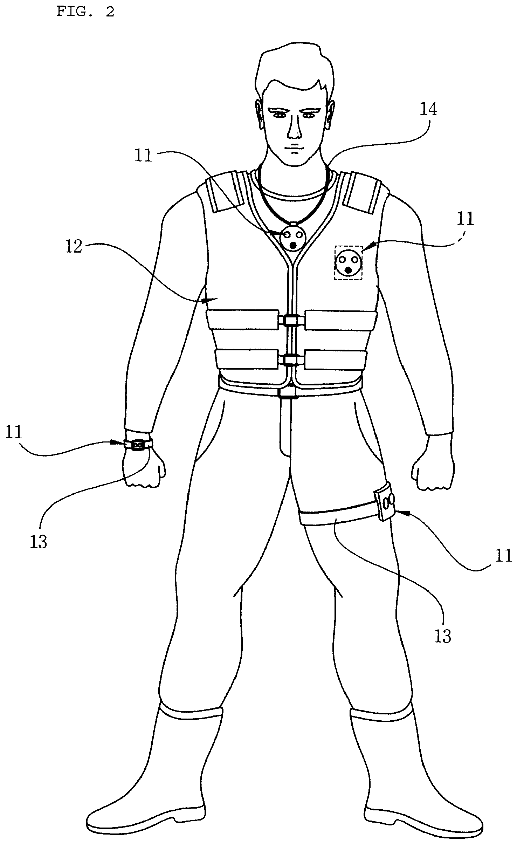

As shown in FIG. 2, in the wearable manipulation device worn by each sailor on his or her body for practical implementation of the remote control system of the fishing equipment according to the present disclosure, a wearable manipulation device installed on a chest part of a life jacket 12 worn by each sailor may be referred to as a representative example. As needed, the manipulation device 11 may be worn on the wrist or thigh of each sailor by using a wear band 13, and may be worn in a form of a necklace on the neck of each sailor using a neckless string 14.

In addition, it should be noted that the position or wearing method of the wearable manipulation device 11 may be variously changed, as long as a sailor in charge manipulating the fishing equipment is able to quickly and easily transmit a manipulation signal required for the operation of the corresponding fishing equipment to the central control device 20 of the fishing vessel 10. In accordance with poor working environments at sea, the wearable manipulation device 11 is manufactured with a watertight casing (i.e., a waterproof casing) as a base thereof, but it is preferable that a weight and size of the wearable manipulation device 11 are reduced and lightened as much as possible while making it easy to wear and manipulate.

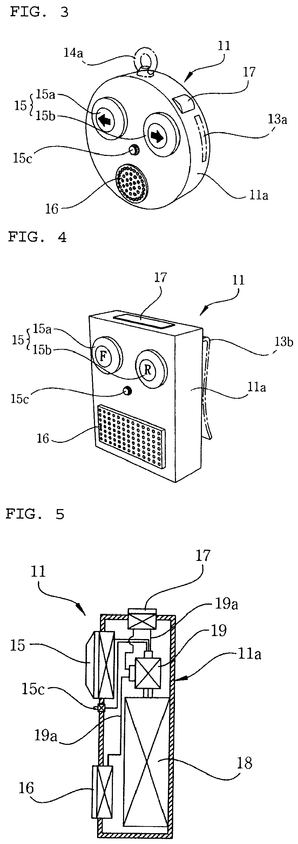

As shown in FIGS. 3 to 5, as the representative example, the wearable manipulation device 11 that may be applied to the present disclosure is configured such that each of a manipulation button 15 and an alarm transmitter 16 is installed on a front outer surface of a watertight casing 11a produced by a circular casing or a square casing, a transmission/reception panel 17 is installed on an upper outer side of the watertight casing 11, each of a battery 18 and a controller 19 is installed in the watertight casing 11a, the manipulation button 15, the alarm transmitter 16, and the transmission/reception panel 17 are connected to and installed with the controller 19 by a cable 19a for input/output, and the battery 18 is connected to and installed with the controller 19 by a cable 19a for power supply.

Accordingly, when a sailor in charge of fishing equipment presses the manipulation button 15 of the wearable manipulation device 11, a manipulation signal of the fishing equipment is transmitted from the controller 19 to the central control device 20 of the fishing vessel 10 via the transmission/reception panel 17, and when an alarm signal is sent from the central control device 20 of the fishing vessel 10, the corresponding signal is transmitted to the controller 19 through the transmission/reception panel 17, and in the meantime, the controller 19 may operate the alarm transmitter 16 to cause an alarm to sound. Furthermore, by installing a warning light instead of the alarm transmitter 16, the controller 19 may also cause the warning light to blink when an alarm signal is transmitted from the central control device 20.

All operations of the wearable manipulation device 11 as described above are performed by the power stored in the battery 18. Batteries of various types ranging from general batteries to lithium batteries or button batteries may be applicable to the battery 18, and as needed, a known rechargeable battery may be used. When the rechargeable battery is used, it is preferable to additionally provide a charging port for the battery on the outside of the watertight casing 11a, and it is preferable that the controller 19 and the transmission/reception panel 17 have a function of detecting a remaining amount of the battery 18 and transmitting a detected result to the central control device 20.

In addition, the wearable manipulation device 11 having the circular watertight casing 11a is suitable for a method of wearing the device in a wristwatch-type on the wrist of each sailor or a method of wearing the device in a necklace-type on the neck of each sailor. The wearable manipulation device 11 having the rectangular watertight casing 11a is suitable for a method of installing the device on the life jacket 12 of each sailor or a method of wearing the device on the thighs of each sailor. In accordance with these wearing methods, it is preferable that a wearing means such as a hook 14a for binding the neckless string 14, a through hole 13a for a wear band 13, a band bracket 13b, or the like is integrally installed on the outside of the watertight casing 11a.

In addition, when the wearable manipulation device 11 is installed in the life jacket 12 of each sailor, the manipulation device 11 is inserted into a pocket provided on a chest part of the life jacket 12 or into a separately provided storage bag, but it is preferable that by exposing the manipulation button 15 to the outside of the life jacket 12 through the pocket or the storage bag, quick button touch as well as safe protection of the manipulation device 11 are enabled, and at the same time, confusion in which the manipulation button 15 is pressed unnecessarily may be prevented. As needed, a life jacket 12 in which the manipulation device 11 is integrally built may also be manufactured, and even in this case, the manipulation button 15 and the charging port for the battery 18 should be exposed to the outside of the life jacket 12.

Unlike the wearable transceiver of the previous application where just one signal button was applied, the wearable manipulation device 11 used in the present disclosure should provide as many manipulation buttons 15 as required for easy operation of fishing equipment. In FIGS. 3 and 4, on the basis of the net hauling machine 5 or the net throwing machine 6, which is mainly used for the fishing vessel 10, a forward rotation button 15a and a reverse rotation button 15b are respectively provided as two manipulation buttons 15 that are required for operation in a forward direction (i.e., winding of a net or fishing gear, based on the net hauling machine) and operation in a reverse direction (i.e., unwinding of the net or fishing gear, based on the net throwing machine) of the corresponding fishing equipment.

It is preferable that the forward rotation button 15a and the reverse rotation button 15b are provided with display means such as arrow patterns (in FIG. 3) or letters (in FIG. 4), so as to easily identify what kind of manipulation signal the corresponding button generates. Three or more manipulation buttons 15 may be provided on the manipulation device 11 as needed according to the type of the fishing equipment. Regardless of the number of applied manipulation buttons 15, it is preferable that each button is disposed at a predetermined interval on the front surface of the watertight casing 11a, and the display means for displaying a manipulation signal generated by the corresponding button is provided on the surface of each button.

In addition, a separate stop button may also be additionally applied as a manipulation button 15 in addition to the forward rotation button 15a and the reverse rotation button 15b, so that a manipulation signal to stop the operation of the fishing equipment by using the wearable manipulation device 11 may be transmitted, but such a method is not preferable in terms of not only having a high risk of causing confusion in button manipulation due to an unnecessary increase in the number of buttons, but also preventing each sailor to quickly and accurately perform appropriate button manipulation that corresponds to an emergency action in the event of a sudden emergency or a risk of accidents during fishing.

Accordingly, in the case of FIGS. 3 and 4 as a reference, it is most preferable to operate an operation stop signal of the fishing equipment in a manner that the forward rotation button 15a and the reverse rotation button 15b are simultaneously pressed. However, even though a sailor in charge may be able to press the two manipulation buttons 15 accurately at the same time without haste when the fishing is normally completed, there is a risk that the sailor in charge may be momentarily panicked and erroneously manipulate the buttons for stopping the fishing equipment 21 in a case of an unexpected situation that interferes with normal operation during fishing, and this corresponds to a risk factor that may occur at any time during the fishing at sea in the fishing vessel 10.

Based on the above point of view, in FIGS. 3 and 4, an auxiliary stop button 15c is additionally installed on a front outer surface of the watertight casing 11a, the front outer surface corresponding to a surface between the forward rotation button 15a and the reverse rotation button 15b. Furthermore, according to the application of the auxiliary stop button 15c, not only by the manipulation of simultaneously pressing the forward rotation button 15a and the reverse rotation button 15b, but also by the manipulation of pressing at least one or more manipulation buttons 15 together with the auxiliary stop button 15c, stopping operation of the fishing equipment may be enabled to be performed, whereby this may be equally applied to the case of transmitting an accident risk signal as that in the previous application by using the corresponding manipulation device 11.

Preferably, in a pin button type, the auxiliary stop button 15c having a smaller size than the forward rotation button 15a or the reverse rotation button 15b is placed between each of the manipulation buttons 15, and in the meantime, is made to protrude to the outside of the watertight casing 11a with a width (i.e., a height) smaller than the protruding width (i.e., a height) of each manipulation button 15, so that a sailor normally presses the manipulation button 15 by using his or her fingers in normal times, and taps the entire front surface of the manipulation device 11 by using their palms in the event of emergency, whereby each manipulation button 15 is preferably pressed together with the auxiliary stop button 15c. In this way, a situation in which the fundamental pressing manipulation of each manipulation button 15 is interrupted by the auxiliary stop button 15c or the auxiliary stop button 15c is pressed by mistaking the auxiliary stop button 15c for the manipulation button 15 may be maximally reduced.

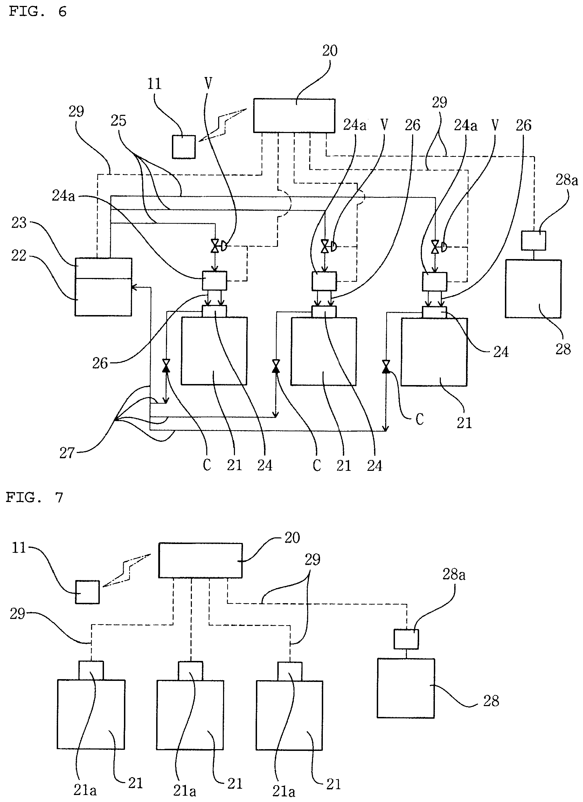

In order to finally implement the remote control system of the present disclosure together with the wearable manipulation device 11 having the above configuration, drive units of the fishing equipment should be linked with the central control device 20. As a representative example of that, FIG. 6 illustrates a state in which hydraulic drive units of the fishing equipment 21 for the fishing vessel 10 are linked with the central control device 20, and FIG. 7 illustrates a state in which electric drive units of the fishing equipment 21 for the fishing vessel 10 are linked with the central control device 20. By linking the central control device 20 with an engine control unit 28a of an engine 28 for the fishing vessel 10 as well, it is preferable to be able to participate in not only the remote control of the fishing equipment 21 but also the operation of the fishing vessel 10 by using the manipulation device 11.

As shown in FIG. 6, each hydraulic drive unit is configured to include: an oil tank 22 for storing hydraulic oil therein; discharge lines 25 extending from the oil tank 22 to respective fishing equipment 21 via an oil pump 23; flow path regulators 24a installed at respective outlets of the discharge lines 25; operation lines 26 for respectively connecting the flow path regulators 24a to hydraulic motors 24 of the corresponding fishing equipment 21; and recovery lines 27 respectively extending from the respective hydraulic motors 24 to the oil tank 22.

Each flow path regulator 24a regulates an inflow path of hydraulic oil through a hydraulic motor 24 according to the forward and reverse rotation of the hydraulic motor 24, and an electromagnetic three-way valve is a representative example. The forward operation lines 26 and the reverse operation lines 26 are extended from the respective flow path regulators 24a and are connected to and install with the respective hydraulic motors 24. Check valves C for preventing reverse flows of hydraulic oil are installed in the respective recovery lines 27 extending from the respective hydraulic motor 24 to the oil tank 22.

Open/close type (i.e., an ON/OFF type) solenoid valves V are installed for respective discharge lines 25 extending from the oil pump 23, so that the central control device 20 may individually control the operation of each piece of fishing equipment 21 in accordance with the manipulation signal transmitted from the manipulation device 11 of each sailor by linking the hydraulic drive units as described above with the central control device 20. The central control device 20 is connected to and installed with the oil pump 23 by one of control cables 29 and is also individually connected to and installed with the solenoid valves V and the flow path regulators 24a, which are assigned to each piece of fishing equipment 21.

Accordingly, the central control device 20 may individually operate each piece of fishing equipment 21 in accordance with a manipulation signal transmitted from the wearable manipulation device 11 worn by each sailor on his or her body through a method in which the opening/closing operation of a discharge line 25, which operates corresponding fishing equipment 21 by supplying hydraulic oil to a hydraulic motor 24 of the fishing equipment 21, is controlled by a solenoid valve V, supply pressure or a supply flow rate of the hydraulic oil supplied to the hydraulic motor 24 of the fishing equipment 21 is controlled by the oil pump 23, and the forward or reverse operation due to the hydraulic motor 24 of the fishing equipment 21 is controlled by the flow path regulator 24a.

In addition, an electric drive unit is an inverter motor 21a assigned to each piece of fishing equipment 21, and the central control device 20 is connected to and installed with the inverter motor 21a by a corresponding control cable 29. The inverter motor 21a is designed to easily convert a rotation speed and a rotation direction of the motor into electrical signals as is known, and has a strong point that a remote manipulation of particular fishing equipment 21 may be performed just by controlling the corresponding inverter motor 21a by using the central control device 20, but has a weak point that the power or driving force (e.g., lifting force) of the fishing equipment 21 is somewhat lower than that of the hydraulic drive unit described above.

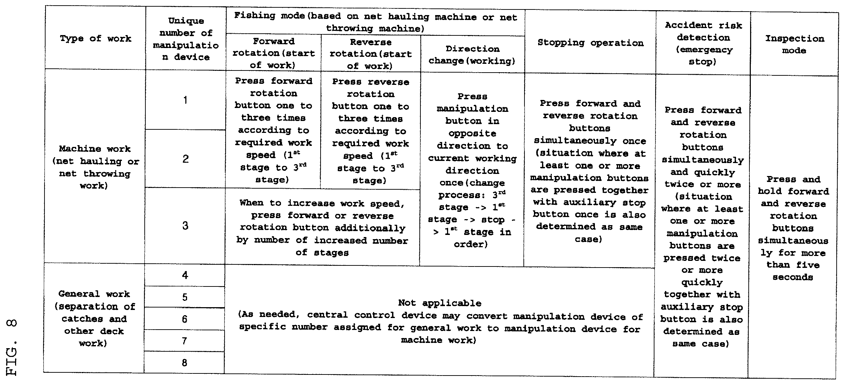

Hereinafter, by using the wearable manipulation device 11 as described above, a method in which each sailor remotely (i.e., in the non-contact type) manipulates the net hauling machine 5 or the net throwing machine 6, and other types of fishing equipment 21 having a similar operation method of the machines will be described on the basis of the table of FIG. 8. Unique numbers of respective manipulation devices 11 shown in FIG. 8 are provided to allow the central control device 20 of the fishing vessel 10 to distinguish a machine worker handling the fishing equipment 21 such as the net hauling machine 5 or the net throwing machine 6 and a general worker performing the classification of catches and other deck work by assigning a different number to each sailor according to the number of sailors on board the fishing vessel 10.

In addition, the unique number of the machine worker's manipulation device 11 and the fishing equipment 21 assigned to the corresponding number should be synchronized (i.e., synchronization is for combining and controlling two or more objects in an appropriate way to equalize phases of the objects) before departure or during operation of the fishing vessel 10, or before fishing. Each sailor on board the fishing vessel 10 may be made to wear the wearable manipulation device 11 applied to the present disclosure, or the general workers other than the machine workers may be made to wear respective wearable transceivers applied to the previous application so that just an accident risk signal may be transmitted instead of a manipulation signal of the fishing equipment 21.

However, naturally, through the synchronization described above, sailors other than the sailors responsible for the corresponding fishing equipment 21 may not be involved in the manipulation of the fishing equipment 21. Whenever necessary, it is more advantageous to allow a general worker to be immediately replaced by a machine worker without replacement of a manipulation device 11, so it is preferable that each sailor on board the fishing vessel 10 wears a wearable manipulation device 11 applied to the present disclosure without distinction between the machine workers and general workers.

In the non-contact remote manipulation method of the fishing equipment 21 using the wearable manipulation device 11, it is preferable that a work speed in a corresponding direction is determined by the number of times the forward rotation button 15a or the reverse rotation button 15b is pressed, change of a work direction is performed by manipulation of pressing the manipulation button 15 in a direction opposite to the current work direction once, and in the meantime, stopping operation of the fishing equipment is performed by manipulation of simultaneously pressing the forward rotation button 15a and the reverse rotation button 15b once.

In other words, when a worker desires to operate the fishing equipment 21 such as the net hauling machine 5 or the net throwing machine 6 in a first stage (i.e., low speed) at the same time as the start of fishing, the worker should press the forward rotation button 15a (i.e., forward operation) or reverse rotation button 15b (i.e., reverse operation) once, and when the worker desires to operate the fishing equipment 21 in a second stage (i.e., medium speed) or in a third stage (i.e., high speed), the worker should press the forward rotation button 15a or the reverse rotation button 15b twice or three times. In a case of changing forward operation to reverse operation or reverse operation to forward operation during the fishing, the worker should press the manipulation button 15 (i.e., the reverse rotation button or forward rotation button) in the direction to be changed (i.e., the reverse direction or forward direction) once.

The change of the work direction as described above is performed by gradually progressing with a predetermined time lag in an order of change from a slowing-down stage of the work speed in the direction in progress to a required work direction via a stop stage of the corresponding work. For example, the change of the work direction is performed in the order of the third stage → second stage → first stage → stop → first stage, so that it is preferable to maximally reduce the impact applied to the fishing equipment 21 or the net 7, or fishing gear due to the sudden change of the work speed and the risk of safety accidents caused thereby. In addition, when a worker desires to further increase a work speed of the fishing equipment 21 in progress, it is preferable to press the manipulation button 15 in the corresponding direction once (e.g., the first stage → second stage, or second stage → third stage) or twice (e.g., the first stage → third stage) by a difference: from a current work speed (e.g., from the first stage or second stage) to the work speed (e.g., to the second stage or third stage) to be increased.

In addition, as previously described, it is most preferable to operate the operation stop signal of the fishing equipment 21 in a manner that the forward rotation button 15a and the reverse rotation button 15b are simultaneously pressed. However, although a sailor in charge may press the two manipulation buttons 15 accurately once at the same time by using his or her fingers (e.g., the index and middle fingers) without haste when the fishing is normally completed, there is a risk that the sailor in charge may be momentarily panicked and erroneously manipulate the corresponding buttons in a case of an unexpected situation that interferes with normal operation during fishing, so appropriate countermeasures to effectively prevent this risk are required.

As part of the above countermeasures, in addition to the button manipulation in which each sailor in charge of corresponding fishing equipment 21 simultaneously presses the forward rotation button 15a and the reverse rotation button 15b once by using his or her fingers, the stopping operation of the fishing equipment 21 may also be performed even by manipulation of pressing (i.e., tapping) at least one or more manipulation buttons 15 together with the auxiliary stop button 15c once by using a sailor's own palm. In spite of the application of the remote control system according to the present disclosure, a risk of accidents may occur during fishing, and thus it is more preferable to be able to send and transfer an accident risk signal to the manipulation device 11 as well in preparation for the corresponding situation.

While an accident risk signal as described above is to be distinguished from an operation stop signal of the fishing equipment 21, the button should be quickly and accurately manipulated in accordance with an emergency situation, so it is preferable that the accident risk signal is sent and transferred not only by manipulation in which each sailor who has detected the risk of the accidents quickly presses (i.e., taps) the forward rotation button 15a and the reverse rotation button 15b twice or more simultaneously by using his or her palm, but also by manipulation in which together with the auxiliary stop button 15c, at least one or more manipulation buttons 15 are pressed (i.e., tapped) twice or more quickly.

When the accident risk signal is input to the central control device 20 in the same way as above, the operation of all the fishing equipment 21 installed in the fishing vessel 10 is urgently stopped by the central control device 20, and only when the accident risk signal is transmitted from the manipulation device 11 of a machine worker assigned to the corresponding fishing equipment 21, only the corresponding fishing equipment 21 may be urgently stopped by the central control device 20. Subsequent processing, which is performed after the emergency stopping of the fishing equipment 21, such as the sending of an alarm signal to the manipulation device 11 of each remaining sailor other than the sailor who transmitted the accident risk signal and the resetting of the manipulation device 11 after the treatment of the accident risk is completed, will be performed in the same manner as that of the previous application.

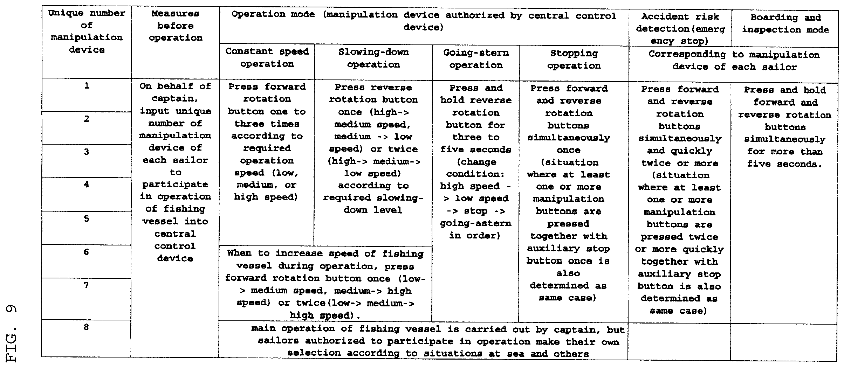

As shown in the table of FIG. 9, the wearable manipulation device 11 is allowed to be used not only for non-contact type remote control of the fishing equipment 21, but also for the operation of the fishing vessel 10. The manipulation device 11 capable of performing such an operation control function is limited to the manipulation device 11 of a sailor who is authorized to participate in the operation of the fishing vessel 10 on behalf of the captain. The unique numbers of respective manipulation devices 11 are input to the central control device 20, and in the meantime, the central control device 20 operates the engine control unit 28a of the engine 28 for the fishing vessel 10 in accordance with the operation signal input from the corresponding manipulation device 11 during the operation of the fishing vessel 10.

Preferably, the operation control method of the fishing vessel 10 using the wearable manipulation device 11 as described above is to be performed by manipulation, including: constant speed manipulation performed by pressing the forward rotation button 15a once, twice, or three times according to the operation speed of the fishing vessel 10, the operation speed being divided into low speed (i.e., the first stage) to high speed (i.e., the third stage); slowing-down manipulation performed by pressing the reverse rotation button 15b once (i.e., high speed → medium speed, medium speed → low speed) or twice (i.e., high speed → medium speed → low speed) according to a required slowing-down level; going-astern manipulation performed by pressing and holding the reverse rotation button 15b for three to five seconds; and operation stop manipulation performed by simultaneously pressing the forward rotation button 15a and the reverse rotation button 15b once.

Even in the case of the going-astern manipulation, it is preferable to perform operation in the going-astern direction from the slowing-down stage of the speed of the fishing vessel 10 in operation via the operation stop stage of the fishing vessel 10, for example, in an order of high speed → medium speed → low speed → stop → going astern, the operation is performed by gradually progressing with a predetermined time lag, so as to maximally reduce the risk of safety accidents such as the overload of the engine 28 and the fall of sailors due to sudden changes in operation speed and direction. When a sailor desires to increase the operation speed during the operation of the fishing vessel 10, it is preferable to allow the sailor to perform manipulation of pressing the forward rotation button 15a once (i.e., low speed → medium speed, medium speed → high speed) or twice (i.e., low speed → medium speed → high speed).

In addition, in order to be able to respond more quickly and effectively to the risk of accidents occurring during the operation of the fishing vessel 10 as well as the unexpected situations occurring at sea during the operation of the fishing vessel 10, it is preferable that even when the operation stop and emergency stopping of the fishing vessel 10, by including button manipulation in which the forward rotation button 15a and the reverse rotation button 15b are simultaneously pressed once (i.e., the operation stop) or twice or more (i.e., the emergency stopping) in the same way as the method applied to the fishing equipment 21, the operation stop signal of the fishing vessel 10 or the accident risk signal during operation is to be transmitted even by manipulation in which at least one or more manipulation buttons 15 are pressed once or twice or more together with the auxiliary stop button 15c.

It is preferable that the operation stop signal is to be transmitted only from the manipulation device 11 authorized by the central control device 20, the accident risk signal during operation is to be transmitted from the manipulation device 11 of each sailor on board the fishing vessel 10, and the follow-up measures against the risk of accidents occurring during the operation of the fishing vessel 10 is also performed in the same method as described in the fishing equipment 21. Naturally, in addition to the method applied to FIGS. 8 and 9, various button manipulation and control methods may be applied according to the type of the fishing equipment 21 and the number of buttons of the manipulation device 11.

As an additional matter, the remote control system according to the present disclosure may also include a boarding and inspection mode using the manipulation device 11. The boarding and inspection mode may be performed once, each at the time of boarding of each sailor, during the operation of the fishing vessel 10, and immediately before the fishing, or may be performed only once at the time of the boarding of each sailor. As in the previous application, each sailor on board the fishing vessel 10 transmits a boarding and inspection signal to the central control device 20 of the fishing vessel 10 by using the manipulation button 15 of the manipulation device 11 worn on his or her body, and in the meantime, the central control device 20 determines whether all the sailors are on board and whether the manipulation device 11 is abnormal according to the number of boarding and inspection signals.

Preferably, the boarding and inspection signal is to be transmitted by manipulation of pressing and holding the forward rotation button 15a and the reverse rotation button 15b simultaneously for five seconds or longer. The corresponding signal is also classified according to the unique number of the manipulation device 11 given to each sailor. A process of checking the remaining amount of the battery 18 of each manipulation device 11 and inputting the checked result to the central control device 20 may be further included when the boarding and inspection signal is transmitted. A sailor wearing the manipulation device 11 to which the boarding and inspection signal has not been transmitted is to be summoned to the wheelhouse 3, so as to perform subsequent processing such as checking of the corresponding manipulation device 11 or replacing and charging of the battery 18.

When the control system of the present disclosure as described above is applied to the fishing vessel 10, the central control device 20 may recognize the manipulation signal transmitted by the manipulation button 15 of the wearable manipulation device 11 worn by each sailor, and operate the fishing equipment synchronized with the corresponding manipulation device 11 according to the manipulation signal, so that unlike the existing contact-type manipulation in which a sailor directly presses the switch, the button, or the like provided in the fishing equipment 21, the non-contact type manipulation of operating the fishing equipment 21 at the position spaced apart from the fishing equipment 21 by the predetermined safe distance is able to be performed, thereby enabling more fundamental prevention of safety accidents in which the part of the sailor's body handling the fishing equipment 21 such as the net hauling machine 5 or net throwing machine 6 is rolled up into the corresponding machine, or the part of the sailor's body gets caught on the net 7 or the rope and is dragged out of the hull with the fishing gear during the net throwing process.

In addition, each sailor is allowed to use his or her manipulation button 15 to transmit the accident risk signal to the central control device 20, regardless of distinguishing each manipulation device 11 when the risk of safety accidents occurring during operation, so that any sailor who witnessed the corresponding situation immediately after the occurrence of the risk of the accidents may use the manipulation button 15 to urgently stop the operation of the fishing equipment 21, and the central control device 20 enables the activation of the alarm means such as the alarm or the warning light provided to the manipulation device 11 worn by each remaining sailor other than the sailor who transmitted the accident risk signal, whereby, the prompt response and follow-up processing in the event of accidents may also be implemented at the same level as that of the previous application.

Meanwhile, each sailor, other than the captain, who has been granted the specific authority may use his or her manipulation device to appropriately select the constant speed operation or slowing-down operation of the fishing vessel, or the going-astern operation or operation stop of the fishing vessel according to the sea conditions even during the operation of the fishing vessel. In addition, the maximally arranged control system for the fishing vessel may be provided, and in the control system, the emergency stopping of the fishing vessel may be enabled through the same process as the process during the fishing against the risk of accidents occurring during the operation of the fishing vessel, and so on, thereby significantly reducing the occurrence rate of safety accidents during the fishing, and at the same time, enabling the safe and efficient operation of the fishing vessel and the prompt response and follow-up measures in the event of accidents.

In particular, the forward rotation button 15a and the reverse rotation button 15b are installed as members of the main manipulation button 15 on the manipulation device 11, an auxiliary stop button 15c is additionally installed between the forward rotation button 15a and the reverse rotation button 15b, and in the meantime, the operation of the fishing equipment 21 or the operation stop or emergency stopping operation of the fishing vessel 10 is enabled even by the manipulation in which the auxiliary stop button 15c is pressed once, or is quickly pressed twice or more together with at least one or more manipulation buttons 15 including the forward rotation button 15a and the reverse rotation button 15b, so that even when each sailor performs manipulation in a state of being momentarily panicked by the unexpected situation or the risk of the accidents, occurring suddenly during the fishing or during operation, the possibility of completing button manipulation corresponding to the situation may be maximally increased, whereby unnecessary damage due to mistakes in button manipulation may be avoided.

## Claims

1. A remote control system of fishing equipment for a fishing vessel, the control system assigning a sailor in charge for each piece of fishing equipment (21) installed in the fishing vessel (10) so as to enable the corresponding sailor to operate the assigned fishing equipment (21), **characterized in that** the system comprises:
a central control device (20) installed in a wheelhouse (3) of the fishing vessel (10); and
a wearable manipulation device (11) configured to be worn by each sailor on his or her body on board the fishing vessel (10), so as to enable the sailor to perform non-contact type manipulation for the fishing equipment (21) by using wireless communication with the central control device (20),
wherein the central control device (20) is connected to and installed with a drive unit of each piece of fishing equipment (21) by a control cable (29), each piece of fishing equipment (21) is synchronized with the manipulation device (11) of the sailor assigned as the sailor in charge, the manipulation device (11) is configured to comprise: a watertight casing (11a) provided with a battery (18) and a controller (19), which are built therein; a manipulation button (15) provided for the fishing equipment (21), and installed on an outer side of a front surface of the watertight casing (11a); and a wireless communication unit provided to communicate wirelessly with the central control device (20), and installed on the outer side or an inner side of the watertight casing (11a), and the manipulation button (15) and the wireless communication unit are respectively connected to and installed on an input side and an output side of the controller (19) by cables (19a).

2. The remote control system of claim 1, **characterized in that** the fishing equipment (21) is configured to comprise a net hauling machine (5) and a net throwing machine (6), and
the manipulation button (15) of the manipulation device (11) is configured to comprise a forward rotation button (15a) and a reverse rotation button (15b) for each of the throwing machine (5) and the throwing machine (6).

3. The remote control system of claim 2, **characterized in that**, in a non-contact manipulation method of the net hauling machine (5) and the net throwing machine (6) using the manipulation button (15), a work speed in a corresponding direction is determined by the number of times the forward rotation button (15a) or the reverse rotation button (15b) is pressed, change of a work direction is performed by manipulation of pressing the manipulation button (15) in a direction opposite to a current work direction once, and in the meantime, stopping operation is performed by manipulation of simultaneously pressing the forward rotation button (15a) and the reverse rotation button (15b) once.

4. The remote control system of claim 3, **characterized in that** an auxiliary stop button (15c) is additionally installed on a front outer surface of the manipulation device (11) corresponding to a surface between the forward rotation button (15a) and the reverse rotation button (15b), and
the stopping operation of the net hauling machine (5) and the net throwing machine (6) is also performed by manipulation in which at least one or more manipulation buttons (15) among the forward rotation button (15a) and the reverse rotation button (15b) are pressed once together with the auxiliary stop button (15c).

5. The remote control system of claim 3, **characterized in that** the change of the work direction of the net hauling machine (5) and the net throwing machine (6) is performed from a slowing-down stage of the work speed in a direction in progress toward a required work direction via a stop stage of the corresponding work,

6. The remote control system of claim 3, **characterized in that** each sailor on board the fishing vessel (10) is enabled to transmit an accident risk signal to the central control device (20) by using his or her manipulation device (11) through manipulation of quickly pressing the forward rotation button (15a) and the reverse rotation button (15b) two or more times at the same time, and
the central control device (20) urgently stops operation of all the fishing equipment (21) installed in the fishing vessel (10) as soon as the accident risk signal is input.

7. The remote control system of claim 6, **characterized in that** an auxiliary stop button (15c) is additionally installed on a front outer surface of the manipulation device (11) corresponding to a surface between the forward rotation button (15a) and the reverse rotation button (15b), and
transmission of the accident risk signal is also performed even by manipulation in which at least one or more manipulation buttons (15) among the forward rotation button (15a) and the reverse rotation button (15b) (15) are pressed quickly twice or more together with the auxiliary stop button (15c).

8. The remote control system of any one of claims 1 to 7, **characterized in that** the wireless communication unit of the manipulation device (11) is a transmission/reception panel (17) capable of performing both transmission and reception with the central control device (20),
the manipulation device (11) is additionally provided with an alarm transmitter (16) or a warning light,
the transmission/reception panel (17) is connected to and installed on each of the input side and the output side of the controller (19), and
the alarm transmitter (16) or the warning light is connected to and installed on the output side of the controller (19) .

9. The remote control system of any one of claims 1 to 7, **characterized in that** the drive unit of the fishing equipment (21) is configured to comprise:
an oil tank (22) configured to store hydraulic oil therein;
discharge lines (25) extending from the oil tank (22) to the respective fishing equipment (21) via an oil pump (23);
flow path regulators (24a) installed at respective outlets of the discharge lines (25);
operation lines (26) configured to respectively connect the flow path regulators (24a) to hydraulic motors (24) of the corresponding fishing equipment (21); and
recovery lines (27) respectively extending from the respective hydraulic motors (24) to the oil tank (22),
wherein solenoid valves (V) are installed in the respective discharge lines (25), one-way check valves (C) are installed in the respective recovery lines (27), the central control device (20) is connected to and installed with the oil pump (23) by the control cable (29), and at the same time, is also individually connected to each of the solenoid valves (V) and the flow path regulators (24a) assigned to the respective fishing equipment (21).

10. The remote control system of any one of claims 1 to 7, **characterized in that** the drive unit of each piece of fishing equipment (21) is an electrically driven inverter motor (21a) assigned to each piece of fishing equipment (21), and
the central control device (20) is connected to and installed with each of the inverter motors (21a) by the control cable (29).

11. The remote control system of claim 2, **characterized in that** the manipulation device (11) is configured to be able to additionally perform an operation control function by the manipulation button (15) and the central control device (20) in an operation mode of the fishing vessel (10),
the manipulation device (11) capable of performing the operation control function is the manipulation device (11) of the sailor who is authorized to participate in the operation of the fishing vessel (10),
the central control device (20) is also connected to and installed with an engine control unit (28a) of an engine (28) for the fishing vessel (10) by the control cable (29), and
an operation control method of the fishing vessel (10) using the manipulation button (15) is configured to comprise:
constant speed manipulation performed by pressing the forward rotation button (15a) once, twice, or three times according to the required operation speed of the fishing vessel (10) ;
slowing-down manipulation performed by pressing the reverse rotation button (15b) once or twice according to a required slowing-down level;
going-astern manipulation performed by pressing and holding the reverse rotation button (15b) for three to five seconds; and
operation stop manipulation performed by simultaneously pressing the forward rotation button (15a) and the reverse rotation button (15b) once.

12. The remote control system of claim 11, **characterized in that** an auxiliary stop button (15c) is additionally installed on a front outer surface of the manipulation device (11) corresponding a surface between the forward rotation button (15a) and the reverse rotation button (15b), and
the operation stop manipulation is also performed by the manipulation in which at least one or more manipulation buttons (15) among the forward rotation button (15a) and the reverse rotation button (15b) are pressed once together with the auxiliary stop button (15c).

13. The remote control system of claim 11, **characterized in that**, in the going-astern manipulation, operation in the going-astern direction is performed from a slowing-down stage of the speed of the fishing vessel (10) in operation via an operation stop stage of the fishing vessel (10).

14. The remote control system of claim 11, **characterized in that** each sailor on board the fishing vessel (10) is enabled to transmit an accident risk signal to the central control device (20) by using his or her manipulation device (11) through manipulation of pressing the forward rotation button (15a) and the reverse rotation button (15b) quickly two or more times at the same time, and
the central control device (20) urgently stops the operation of the engine (28) of the fishing vessel (10) as soon as the accident risk signal is input.

15. The remote control system of claim 14, **characterized in that** an auxiliary stop button (15c) is additionally installed on a front outer surface of the manipulation device (11) corresponding a surface between the forward rotation button (15a) and the reverse rotation button (15b), and
transmission of the accident risk signal is also performed by manipulation in which at least one or more manipulation buttons (15) among the forward rotation button (15a) and the reverse rotation button (15b) are pressed quickly twice or more together with the auxiliary stop button (15c).
